# EUROPÄISCHE PATENTSCHRIFT

(11) **EP 2 639 934 B1**
(45) Veröffentlichungstag und Bekanntmachung des Hinweises auf die Patenterteilung: **29.04.2015**
(21) Anmeldenummer: 12159915.3
(22) Anmeldetag: 16.03.2012
(51) Int. Cl.: H02K 1/27, H02K 1/28

(54) **Rotor mit Permanenterregung, elektrische Maschine mit einem solchen Rotor und Herstellungsverfahren für den Rotor**
Rotor with permanent excitation, electrical machine with such a rotor and method for producing the rotor
Rotor à excitation permanente, machine électrique dotée d'un tel rotor et procédé de fabrication du rotor

(43) Veröffentlichungstag der Anmeldung: 18.09.2013
(73) Patentinhaber: Siemens Aktiengesellschaft, 80333 München (DE)
(72) Erfinder: Mader, Daniel, 97616 Bad Neustadt a.d. Saale (DE); Vollmer, Rolf, 36129 Gersfeld (DE)

(56) Entgegenhaltungen:
- EP-A2- 2 485 371
- WO-A1-2011/076740
- FR-A1- 2 556 519
- JP-A- 56 007 410
- JP-A- 58 099 253

## Beschreibung

Die Erfindung betrifft einen Rotor, bei welchem für eine Permanenterregung eine Mehrzahl von Permanentmagneten um eine Welle des Rotors in Umfangsrichtung angeordnet ist. Zum Führen eines magnetischen Flusses der Permanentmagneten ist bei dem Rotor eine Flussleiteinrichtung vorgesehen. Zu der Erfindung gehören auch eine elektrische Maschine mit einem solchen Rotor sowie ein Verfahren zum Herstellen eines Rotors mit Permanenterregung. Der erfindungsgemäße Rotor und entsprechend auch die erfindungsgemäße Maschine eignen sich insbesondere zum Bereitstellen eines elektrischen Antriebs eines Elektrofahrzeugs.

Bei Rotoren der genannten Art kann vorgesehen sein, als die Flussleiteinrichtung einen weichmagnetischen Grundkörper aus Blechen zu bilden. Diese sind dann zu einem Blechpaket aufgeschichtet, wobei zwischen den einzelnen Blechen eine elektrisch isolierende Schicht zum Vermeiden von Wirbelströme vorgesehen ist. In den einzelnen Blechen ist ein Loch in deren Mitte ausgestanzt, so dass das Blechpaket nach seiner Fertigstellung eine Durchgangsöffnung aufweist, durch welche die Welle des Rotors gesteckt wird. Das Blechpaket kann so durch eine Presspassung mit der Welle verbunden werden. Des Weiteren sind in den Blechen auch Aussparungen an deren äußeren Rand ausgestanzt, so dass sich im fertigen Blechpaket in Umfangsrichtung Taschen ergeben, in welche Permanentmagneten für eine Permanenterregung des Rotors eingebettet werden können. Mit Umfangsrichtung ist hierbei und im Folgenden die übliche Bezeichnung gemeint, d.h. bezogen auf eine Rotationsachse des Rotors ergibt sich die Umfangsrichtung in einer Ebene senkrecht zur Rotationsachse des Rotors, was der Verlaufsrichtung eines Kreises um die Rotationsachse in dieser Ebene entspricht.

In dem Dokument WO 2011/076740 A1 ist ein Rotor für eine elektrische Maschine beschrieben, bei welcher Permanentmagneten in Nuten einer Röhre befestigt sind, welche eine Tragstruktur für die Permanentmagneten sowie zwischen den Permanentmagneten angeordnete Flussleitelemente bildet. Die Flussleitelemente sind mit den Permanentmagneten und der Röhre beispielsweise durch eine Klebeverbindung verbunden. Die Röhre kann mit einer Welle verbunden werden, um ein Drehmoment weiterleiten zu können.

In dem nach dem Tag der Einreichung der vorliegenden Anmeldung veröffentlichten Dokument EP 2 485 371 A2 ist ein Rotor beschrieben, bei welchem Permanentmagneten sternförmig an einer Welle angeklebt sind und zwischen den Permanentmagneten Flussleitelemente eingeklebt sind.

In dem Dokument JP 58 099253 A ist ein Rotor für eine Synchronmaschine beschrieben, bei welchem Permanentmagneten sternförmig an einer Welle angeklebt sind. Zwischen den Permanentmagneten sind Flussleitelemente angeordnet, die ebenfalls an dem Schaft befestigt sind. Bei dem Rotor ist zur Verstärkung eines magnetischen Feldes vorgesehen, dass die Flussleitelemente die Permanentmagneten nicht in radialer Richtung überragen.

In dem Dokument FR 2 556 519 A1 ist ein Rotor beschrieben, bei welchem Permanentmagneten auf einer Welle aufgelötet sind. Die Permanentmagneten sind in radialer Richtung magnetisiert, sodass sich zwischen ihnen keine Flussleitelemente befinden.

In dem Dokument JP 56 007410 A ist eine elektrische Maschine beschrieben, bei welcher ein ringförmiger Permanentmagnet auf einem Trägerteil befestigt ist, in dem der Permanentmagnet auf einen Stutzen des Trägerteils aufgesteckt und dort festgelötet ist. Um den Permanentmagneten anlöten zu können, ist dieser von einer Kupferschicht umhüllt. Das Trägerteil weist eine Durchgangsöffnung auf, in die eine Welle eines Motors gesteckt werden kann.

Eine Aufgabe der Erfindung besteht darin, eine robuste und dennoch einfach und kostengünstig herzustellende elektrische Maschine bereitzustellen.

Die Aufgabe wird durch einen Rotor gemäß Patentanspruch 1, eine elektrische Maschine gemäß Patentanspruch 11 und ein Verfahren gemäß Patentanspruch 13 gelöst. Vorteilhafte Weiterbildungen der Erfindung sind durch die Unteransprüche gegeben.

Der erfindungsgemäße Rotor weist ebenfalls eine Mehrzahl von Permanentmagneten auf, die um eine Welle des Rotors in Umfangsrichtung angeordnet sind. Die Permanentmagneten sind hierbei nun aber an der Welle selbst befestigt, d.h. sie werden nicht in Taschen eines weichmagnetischen Blechpakets untergebracht. Zum Führen des magnetischen Flusses der Permanentmagneten ist wie beim Stand der Technik ebenfalls eine Flussleiteinrichtung vorgesehen. Bei dem erfindungsgemäßen Rotor umfasst diese allerdings eine Mehrzahl von separaten, weichmagnetischen Flussleitelementen, also etwa einzelne Blechpakete, die jeweils ein Segment des Rotors bilden. Die einzelnen Flussleitelemente sind jeweils zwischen zwei der Permanentmagneten an diesen befestigt. Mit anderen Worten sind die weichmagnetischen Flussleitelemente nur mittelbar an der Welle gehalten und nicht wie beim Stand der Technik beispielsweise durch eine Presspassung auf die Welle aufgeschoben.

Der erfindungsgemäße Rotor weist den Vorteil auf, dass er sich sehr einfach um die Welle herum aufbauen lässt, indem zunächst die Permanentmagneten an der Welle des Rotors befestigt werden, anschließend die Flussleitelemente in den Zwischenräumen zwischen den Permanentmagneten angeordnet und dann an den Permanentmagneten befestigt werden.

Zum Befestigen der Permanentmagneten an der Welle ist vorgesehen, diese an der Welle anzulöten. Eine Lötverbindung ist zum einen fest genug, um die Permanentmagneten gegen die bei einer Rotation des Rotors wirkenden Fliehkräfte an der Welle zu halten. Zum anderen ist das Lot der Lötverbindung weich genug, um bei Vibrationen im Rotor nicht zu brechen. Als besonders geeignet hat sich hierbei ein Lot herausgestellt, welches Silber und/oder Zinn enthält. Eine weitere Möglichkeit der Befestigung der Permanentmagneten an der Welle ist eine Schweißverbindung. Hierbei ist allerdings zu beachten, dass durch die Hitze beim Schweißen nicht die Magnetisierung der Permanentmagneten verloren gehen darf. Bei einer Lötverbindung ist diese Gefahr deutlich geringer. Als formschlüssige Verbindungen sind beispielsweise das Anschrauben der Permanentmagneten oder das Ausbilden einer Schwalbenschwanzverbindung möglich.

Um einen noch regelmäßigeren, sinusförmigen Verlauf zu erhalten, ist bei einem Flussleitelement noch eine Stufe oder ein Hinterschnitt vorgesehen, mit welchem das Flussleitelement auf einer Außenkante eines Permanentmagneten aufliegt, so dass diese Außenkante durch die Stufe des Flussleitelements abgedeckt ist. Mit Außenkante ist hierbei eine in radialer Richtung außen liegende Kante des Permanentmagneten gemeint. Durch eine Stufe im Flussleitelement lässt sich ein Flussleitelement zudem besonders einfach bezüglich des erwähnten Hüllkreises ausrichten.

Auf der Grundlage des erfindungsgemäßen Rotors lässt sich entsprechend auch besonders kostengünstig eine permanenterregte elektrische Maschine bereitstellen. Besonders geeignet ist der erfindungsgemäße Rotor zum Herstellen einer Synchronmaschine, eines Servomotors und eines Schrittmotors.

Der Begriff Welle bezeichnet im Zusammenhang mit der Erfindung den gesamten inneren Bereich des Rotors, welcher nicht in signifikanter Weise ein magnetisch aktives Teil für die Erzeugung eines Drehmoments zum Antreiben des Rotors bzw. zum Erzeugen von elektrischer Spannung bildet. Mit anderen Worten ist die Welle derjenige Teil des Rotors, welcher nur tragende Funktion hat und für die mechanische Übertragung eines Drehmoments dient. Im Gegensatz dazu ist der magnetisch aktive Teil durch die Permanentmagneten und die Flussleitelemente gebildet. Die Welle kann also eine Stange aus beispielsweise Stahl sein oder aber auch ein hohlzylindrischer Körper (Hohlwelle). Die Welle kann zur Vergrößerung eines Außenumfangs des Rotors im Bereich der Permanentmagneten auch z.B. Speichen und einen von den Speichen getragenen Ring umfassen, an welchem dann die Permanentmagneten befestigt sind.

Um das Herstellen der Verbindung, insbesondere einer Löt- oder Schweißverbindung, zu erleichtern, sieht eine Ausführungsform vor, bei einem Permanentmagneten in einem Auflagebereich an der Welle eine Metallbeschichtung vorzusehen. Genauso kann auch die Welle in dem Auflagebereich eine Beschichtung aus einem Metall aufweisen, welches von dem Metall verschieden ist, aus welchem die Welle selbst gefertigt ist. Für eine Lötverbindung hat sich hier insbesondere eine Beschichtung als zweckmäßig erwiesen, welche Nickel oder Kupfer umfasst.

Im Auflagebereich entsprechen sich die Welle und die Permanentmagneten zweckmäßigerweise auch in ihrer Form. Je nach Größe und Art der Permanentmagneten kann hierbei vorgesehen sein, dass ein Permanentmagnet eine konkav gewölbte Oberfläche aufweist. Dann ist es möglich, eine gewöhnliche, zylinderförmige Welle zu verwenden, die in ihrer Form nicht extra zum Bereitstellen des erfindungsgemäßen Rotors angepasst werden muss. Ist es allerdings kostengünstiger, die Welle speziell auszuformen und so quaderförmige und deshalb einfach zu formende Permanentmagneten verwenden zu können, so ist eine Welle bevorzugt, deren Oberfläche im Auflagebereich des Permanentmagneten eben ist. So können einfach zu formende und daher kostengünstig herzustellende Permanentmagnete verwendet werden. Mit anderen Worten wird in diesem Fall eine Welle mit polygonförmiger Kontur im Querschnitt verwendet, wenn alle Permanentmagneten im Auflagebereich ebene Oberfläche aufweisen.

In Bezug auf die Flussleitelemente ergibt sich eine besonders kostengünstig herzustellende Ausführungsform des erfindungsgemäßen Rotors, wenn die Flussleitelemente an den Permanentmagneten angeklebt sind. Die Klebeverbindung weist hierbei insbesondere einen Silikonkleber auf. Dieser weist ähnlich wie die Lötverbindung für die Permanentmagneten zum einen die nötige Stärke zum Halten der Flussleitelemente gegen die Zentrifugalkräfte und zum anderen eine ausreichende Elastizität zum Kompensieren oder sogar Dämpfen von Vibrationen im Rotor auf.

Eine besonders bevorzugte Ausführungsform des Rotors ergibt sich, wenn als Flussleitelemente keilförmige Elemente verwendet werden, also Zylindersegmente. Diese Ausführungsform des Rotors weist dann insgesamt einen Querschnitt auf, in welchem die Permanentmagneten sternförmig an der Welle angeordnet und die keilförmigen Flussleitelemente zwischen den Permanentmagneten befestigt sind. Dieser beschriebene Querschnitt ist dabei senkrecht zur Rotationsachse des Rotors gebildet. Der sich so ergebende Rotor ist sehr robust und dennoch besonders einfach zu fertigen.

In Bezug auf die Permanentmagneten selbst, können diese beispielsweise Seltenerdmagneten sein. Bevorzugt handelt sich bei den Permanentmagneten aber um Ferritmagneten, die bedeutend günstiger als die erstgenannten sind. Ferritmagneten weisen allerdings auch eine deutlich geringere Magnetfeldstärke auf. Bei dem erfindungsgemäßen Rotor ist das allerdings kein Problem: Das magnetische Feld von Ferritmagneten lässt sich hier soweit aufkonzentrieren, dass in einem Luftspalt zwischen dem Rotor und einem Stator einer elektrischen Maschine ein Magnetfeld mit der für permanenterregte elektrische Maschinen üblichen Feldstärke erzeugt werden kann. Hierzu müssen die Magnetisierungen der Permanentmagneten lediglich in Umfangsrichtung weisen, also nicht radial von der Welle weg, sondern tangential zum Umfang der Welle. Die zwischen den Permanentmagneten befindlichen Flussleitelemente sorgen dann dafür, dass die Magnetfeldlinien in radialer Richtung nach außen hin umgelenkt und radial aus dem Rotor an dessen Außenumfang austreten. Durch das Umlenken findet dabei eine Flusskonzentration statt, so dass das Feld der Ferritmagneten aufkonzentriert im Luftspalt stärker ist als an der Oberfläche der Ferritmagneten selbst. Natürlich lassen sich hierbei auch Seltenerdmagneten verwenden, so dass ein noch stärkeres magnetisches Feld erzeugbar ist.

Eine noch größere Flusskonzentration kann erreicht werden, wenn die Magnetisierungen zweier benachbarter Permanentmagneten entgegengesetzt zueinander ausgerichtet sind.

Bei elektrischen Maschinen ist man zusätzlich auch bestrebt, dass in dem Luftspalt zwischen Rotor und Stator ein magnetisches Feld zu erzeugen, dessen Feldstärke (nicht die Richtung) in Umfangsrichtung um den Rotor sinusförmig verläuft. Dies kann bei dem erfindungsgemäßen Rotor durch eine ganz bestimmte Ausgestaltung der äußeren Oberfläche der Flussleitelemente erreicht werden, also derjenigen Oberfläche eines jeden Flussleitelements, welche dieses (bezogen auf die Welle) in radialer Richtung nach außen zum Rotoräußeren hin begrenzt. Diese Oberfläche weist bevorzugt in Umfangsrichtung des Rotors eine Krümmung mit einem Krümmungsradius auf, der kleiner als ein Hüllkreisradius eines Hüllkreises ist, welcher den maximalen Außenumfang des Rotors in Umfangsrichtung beschreibt. Für eine Veranschaulichung dieser beiden Radien sei auf die noch folgende Beschreibung der Figuren verwiesen. Hier sei noch angemerkt, dass der Krümmungsradius insbesondere in einem Bereich zwischen 50 und 100 Prozent des Hüllkreisradius liegt.

Die im Zusammenhang mit dem erfindungsgemäßen Rotor beschriebenen Weiterbildungen stellen auch Weiterbildungen der erfindungsgemäßen elektrischen Maschine dar. Ebenso umfasst die Erfindung auch Weiterbildungen des erfindungsgemäßen Verfahren zum Herstellen des Rotors, die Merkmale umfassen, die hier im Zusammenhang mit Weiterbildungen des erfindungsgemäßen Rotors selbst beschrieben wurden, wie etwa das Befestigen der Permanentmagneten durch Löten und dergleichen. Um Wiederholungen zu vermeiden, werden diese Merkmale hier nicht noch einmal im Zusammenhang mit der erfindungsgemäßen Maschine und dem erfindungsgemäßen Verfahren beschrieben.

Im Folgenden wird die Erfindung noch einmal konkreter anhand von Ausführungsbeispielen erläutert. Dazu zeigt:
- FIG 1: eine schematische Darstellung einer Ausführungsform des erfindungsgemäßen Rotors im Querschnitt;
- FIG 2: eine schematische Darstellung einer Verbindung eines Permanentmagneten mit einer Welle, wie sie bei der Herstellung einer Ausführungsform des erfindungsgemäßen Rotors erzeugt wird;
- FIG 3: eine schematische Darstellung einer weiteren Ausführungsform des erfindungsgemäßen Rotors im Querschnitt; und
- FIG 4: eine schematische Darstellung von Auflagekanten von Permanentmagneten, die von Flussleitelementen bei einer Ausführungsform des erfindungsgemäßen Rotors abgedeckt sind.

Die Beispiele stellen bevorzugte Ausführungsformen der Erfindung dar.

Bei dem im Folgenden erläuterten Beispiel stellen die beschriebenen Komponenten des Rotors jeweils einzelne, unabhängig voneinander zu betrachtende Merkmale des Rotors dar, welche den Rotor jeweils auch unabhängig voneinander weiterbilden und damit auch einzeln oder in einer anderen als der gezeigten Kombination als Bestandteil anzusehen sind.

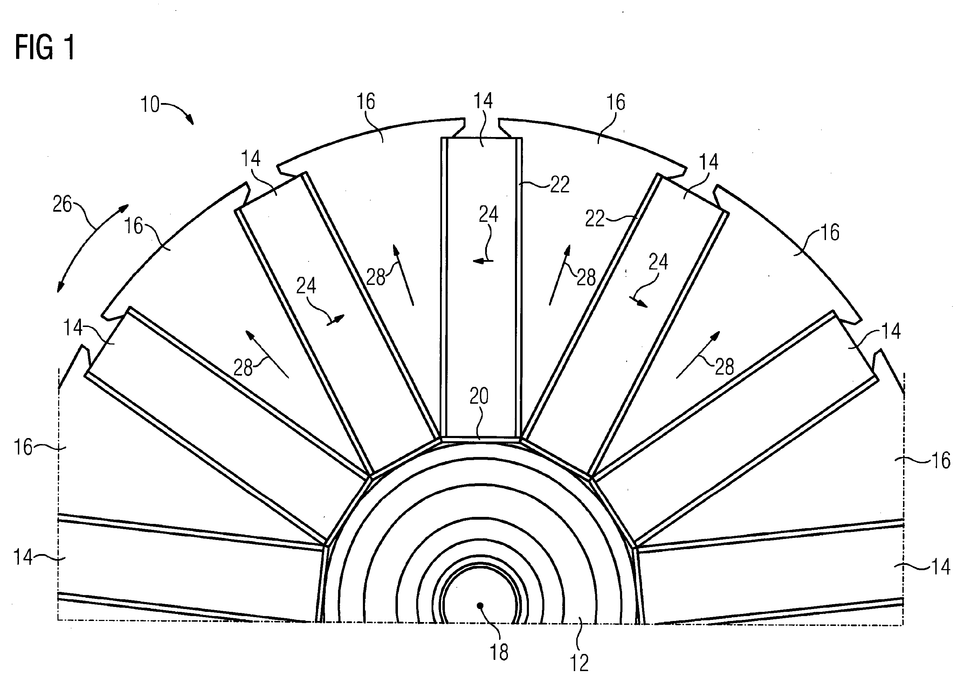

FIG 1 zeigt einen Querschnitt eines Rotors 10, bei welchem an einer Welle 12 Permanentmagneten 14 befestigt sind, zwischen denen jeweils Flussleitelemente 16 eingefügt sind. Von dem Rotor 10 ist in FIG 1 nur ein Ausschnitt gezeigt, wie durch Bruchlinien angedeutet ist. Der Rotor 10 kann in einer elektrischen Maschine eingebaut sein, beispielsweise einer Synchronmaschine oder einem Servomotor. Die elektrische Maschine kann beispielsweise ein Antrieb für ein Elektrofahrzeug sein.

Eine Rotationsachse 18 des Rotors 10 verläuft senkrecht zur Bildebene von FIG 1. Der Rotor 10 weist insgesamt eine zylinderförmige Grundform auf, wobei die Zylinderachse mit der Rotorachse 18 zusammenfällt. Die Welle 12 kann in dem gezeigten Beispiel aus einem massiven Körper aus Stahl gebildet sein. Die Permanentmagneten 14 können eine längliche, quaderförmige Grundform aufweisen, wobei die Längserstreckung parallel zur Rotationsachse 18 verläuft. Genauso handelt es sich bei den Flussleitelementen 16 um längliche Körper, die jeweils als Grundform diejenige eines Zylindersegments aufweisen, wobei Körper mit ihrer Längserstreckung ebenfalls parallel zur Rotationsachse 18 ausgerichtet sind. Insgesamt sind die Permanentmagneten 14 in dem in FIG 1 gezeigten, senkrecht zur Rotationsachse 18 gebildeten Querschnitt sternförmig an der Welle 12 angeordnet. Die Flussleitelemente 16 weisen in dem Querschnitt eine Keilform auf und sind zwischen den Permanentmagneten 14 angeordnet.

Bei den Permanentmagneten 14 kann es sich keramische Magneten, beispielsweise um Ferritmagneten handeln. Die Permanentmagneten 14 sind jeweils durch eine Lötverbindung 20 an der Welle 12 befestigt. In FIG 1 ist der Übersichtlichkeit halber lediglich für einen der Permanentmagneten 14 die Lage der Lötverbindung 20 gezeigt. Bei den Permanentmagneten 14 weist eine jeweilige Magnetisierung 24 entlang einer Umfangsrichtung 26 (die Umfangsrichtung 26 hier durch einen Doppelpfeil angezeigt, da die Orientierung hier keine Rolle spielt). Das von den Permanentmagneten 14 erzeugte magnetische Feld wird durch die Flussleitelemente 16 in eine radiale Richtung 28 nach außen hin umgeleitet und hierbei konzentriert.

Die Flussleitelemente 16 sind hierzu aus einem weichmagnetischen Material gefertigt. Sie können beispielsweise jeweils durch ein Blechpaket gebildet sein. Die Flussleitelemente 16 sind nicht unmittelbar an der Welle 12 befestigt. Jedes Flussleitelement 16 ist durch eine Klebeverbindung 22 an denjenigen Permanentmagneten 14 fixiert, zwischen denen es sich befindet. Auch von den Klebeverbindungen 22 ist in FIG 1 der Übersichtlichkeit halber lediglich die Klebeverbindungen 22 für ein Flussleitelement 16 mit einem Bezugszeichen versehen.

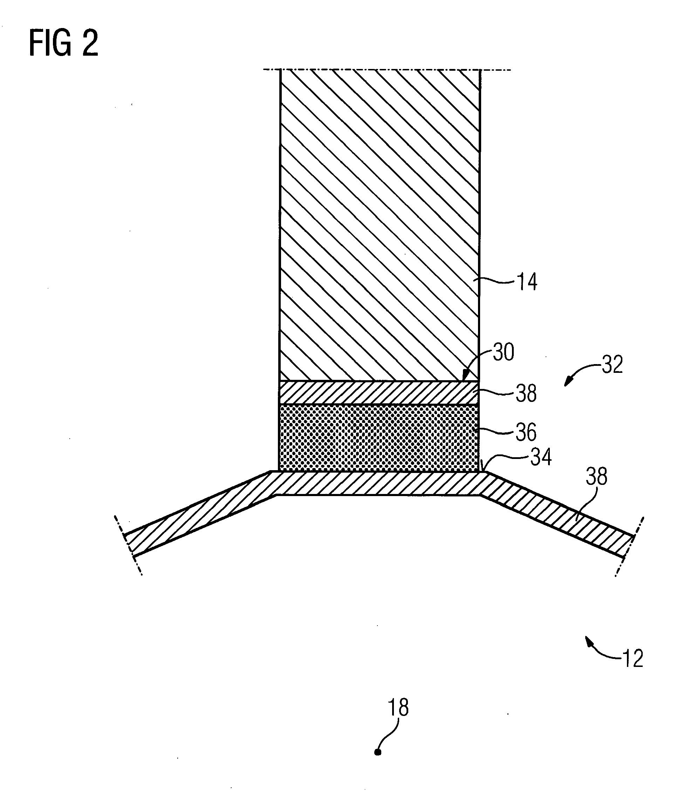

Im Folgenden ist anhand von FIG 2 erläutert, wie ein Rotor, beispielsweise der Rotor 10 von FIG 1, hergestellt werden kann. Um die Orientierung zu erleichtern ist dabei in FIG 2 und auch in den folgenden Figuren für Elemente, die Elementen aus FIG 1 entsprechen, jeweils dasselbe Bezugszeichen wie in FIG 1 verwendet.

In FIG 2 ist noch einmal in vergrößerter Darstellung eine Welle 12 gezeigt, an welcher ein Permanentmagnet 14 befestigt wurde. Der Permanentmagnet 14 weist eine quaderförmige Grundform auf, so dass eine Oberfläche 30 des Permanentmagneten 14 in einem Auflagebereich 32 des Permanentmagneten 14 an der Welle 12 eben ist. Eine Oberfläche 34 der Welle 12 ist im Auflagebereich 32 entsprechend geformt, das heißt sie ist ebenfalls eben. Insgesamt weist die Welle 12 in einem Querschnitt senkrecht zur Rotationsachse 18 damit eine Polygonform auf, wenn die Auflageflächen aller Permanentmagneten 14 eben sind. Alternativ dazu kann die Welle 12 auch rund sein, wenn die Permanentmagneten 14 auf der der Welle 12 zugewandten Seite eine entsprechende runde Kontur haben, das heißt, wenn sie dort jeweils konkav zum Inneren der Permanentmagneten 14 hin gewölbt sind.

Um den Permanentmagneten 14 an der Welle 12 zu befestigen, ist ein Lot 36 z.B. in Form einer Lotpaste aufgetragen worden und erhitzt worden. Bei dem Lot 36 kann es sich beispielsweise um ein Weichlot handeln, beispielsweise ein Lot, welches Silber oder Zinn umfasst. Um eine feste, stoffschlüssige Verbindung mittels des Lots 36 zu erhalten, sind in dem in FIG 2 gezeigten Beispiel sowohl der Permanentmagnet 14 als auch die Welle 12 mit einer Schicht 38, insbesondere einer Metallschicht, wie beispielsweise einer Schicht aus Nickel und/oder Kupfer, beschichtet.

Nachdem der Permanentmagnet 14 und weitere Permanentmagneten (vergleiche FIG 1) an der Welle 12 in der in FIG 2 gezeigten Weise befestigt sind, werden Flussleitelemente 16, das heißt zum Beispiel Blechsegmente, zwischen die Permanentmagneten 14 eingefügt und z.B. mittels eines Klebers, beispielsweise eines Silikonklebers, an den Permanentmagneten 14 befestigt.

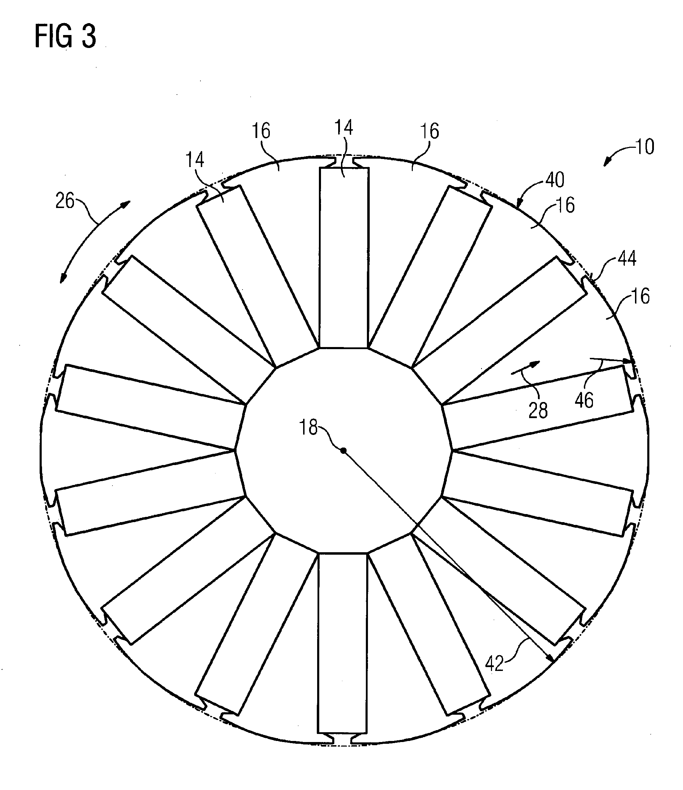

Anhand von FIG 3 ist im Folgenden erläutert, wie bei einem segmentierten Rotor 10 durch Permanentmagneten 14 ein äußeres Magnetfeld erzeugt werden kann, das entlang einer Umfangsrichtung 26 einen möglichst sinusförmigen Verlauf der Feldstärke aufweist. Bei dem in FIG 3 gezeigten Rotor 10 kann es sich beispielsweise um den Rotor von FIG 1 handeln. Der Übersichtlichkeit halber sind in FIG 3 nur einige Permanentmagneten 14 und Flussleitelemente 16 mit Bezugszeichen versehen. FIG 3 zeigt wieder einen Schnitt durch einen Rotor 10 senkrecht zu einer Rotationsachse 18. Zur besseren Veranschaulichung ist in FIG 3 noch ein Hüllkreis 40 gezeigt, welcher den maximalen Außenumfang des Rotors 10 ausgehend von der Rotationsachse 18 beschreibt. Der Hüllkreis 40 weist einen Hüllkreisradius 42 auf.

Die einzelnen Flussleitelemente 16 weisen Außenoberflächen 44 auf, die entlang der Umfangsrichtung 26 gekrümmt ist. Mit Au-βenoberfläche 44 ist dabei diejenige Oberfläche eines Flussleitelements 16 gemeint, welche das jeweilige Flussleitelement 16 in radialer Richtung 28 begrenzt. Der Übersichtlichkeit halber sind für die Erläuterungen in FIG 3 lediglich nur für ein Flussleitelement 16 entsprechende Komponenten mit einem Bezugzeichen versehen. Die Außenoberflächen 44 der Flussleitelemente 16 weisen dabei jeweils einen Krümmungsradius 46 auf, der kleiner als der Hüllkreisradius 42 ist.

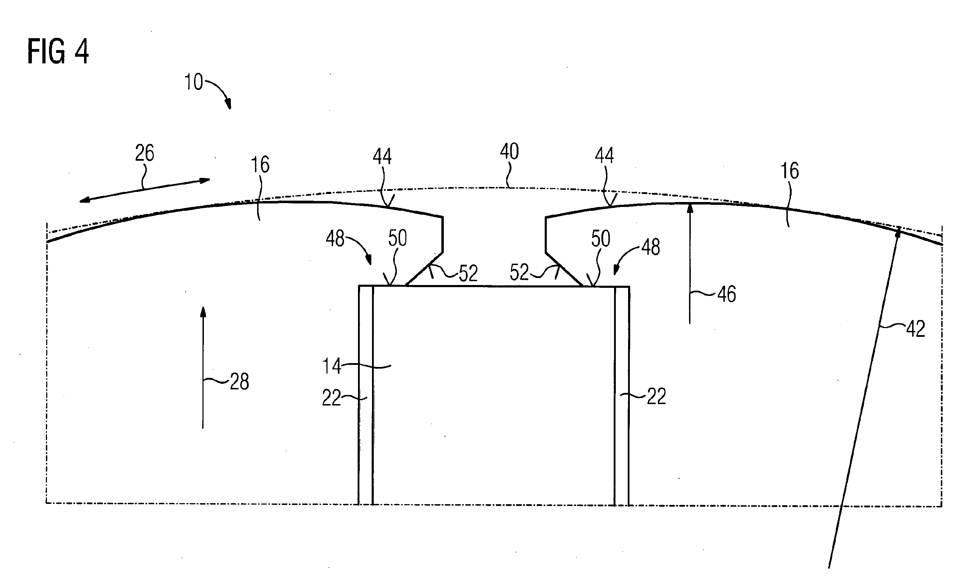

In FIG 4 ist gezeigt, wie mit Hilfe von Hinterschnitten oder Stufen 48 erreicht werden kann, dass die Flussleitelemente 16 beim Kleben nur genau so weit zwischen die Permanentmagneten 14 geführt werden, dass gewährleistet ist, dass alle Außenoberflächen 44 vom Hüllkreis 40 tangential berührt werden. Hierzu werden die Flussleitelemente 16 so weit zwischen die Permanentmagneten 14 geschoben, bis die Stufen 48 auf Auflagekanten 50 der Permanentmagneten 14 aufliegen. Mit Auflagekante 50 eines Permanentmagneten 14 ist hierbei eine zu einer Außenseite des Rotors 10 hin weisende Kante des Permanentmagneten 14 gemeint. Durch Abdecken der Auflagekanten 50 des Permanentmagneten 14 mittels der Stufen 48 der Flussleitelemente 16 wird des Weiteren der Verlauf der Feldstärke des äußeren Magnetfelds des Rotors 10 besser an den gewünschten sinusförmigen Verlauf angepasst. Durch Abschrägungen 52 im Bereich der Stufen 48 werden zusätzlich Feldspitzen des aus den Flussleitelementen 16 austretenden beziehungsweise eintretenden Magnetfelds vermieden.

Die gezeigten Beispiele weisen des Weiteren den Vorteil auf, dass die Permanentmagneten 14 und Flussleitelemente 16 derart fest mit der Welle verbunden werden können, dass keine zusätzlichen Außenbandagen nötig sind, welche die Flussleitelemente 16 und die Permanentmagneten 14 gegen Zentrifugalkräfte stabilisieren.

Durch die Beispiele ist insgesamt gezeigt, wie eine Kombination aus den Verbindungstechniken Löten und Kleben genutzt werden kann, um bei einem permanentmagneterregten Rotor mit innen liegenden Magneten in Flusskonzentration eine robuste und zugleich leicht zu fertigende Bauweise ermöglicht werden kann. Ferner ist der Einsatz metallisierter Ferritmagneten für eine Lötung auf einer metallisierten Welle gezeigt. Stufen in Flussleitelementen, wie beispielsweise Blechpaketsegmenten, ermöglichen ein genaues Positionieren der einzelnen Flussleitelemente zwischen den Permanentmagneten.

## Patentansprüche

1. Rotor (10) mit Permanenterregung, welcher für die Permanententerregung eine Mehrzahl von Permanentmagneten (14) aufweist, die um eine Welle (12) des Rotors (10) in Umfangsrichtung (26) angeordnet sind, wobei zum Führen eines magnetischen Flusses der Permanentmagneten (14) eine Flussleiteinrichtung vorgesehen ist, wobei die Permanentmagneten (14) an der Welle (12) selbst befestigt sind und die Flussleiteinrichtung eine Mehrzahl von separaten, weichmagnetischen Flussleitelementen (16) umfasst, die jeweils zwischen zweien der Permanentmagneten (14) an diesen befestigt, und hierdurch mittelbar an der Welle (12) gehalten sind,
**dadurch gekennzeichnet, dass**
wenigstens einer der Permanentmagneten (14) an der Welle (12) angelötet oder angeschweißt oder mit der Welle formschlüssig verbunden ist und zumindest eines der Flussleitelemente (16) zumindest einen Auflagebereich aufweist, in welchem das Flussleitelement (16) eine in radialer Richtung (28) außen liegende Kante eines der Permanentmagneten (14) abdeckt.

2. Rotor (10) nach Anspruch 1, wobei die Lötverbindung ein Lot 36 umfasst, welches Silber und/oder Zinn enthält.

3. Rotor (10) nach Anspruch 1 oder 2, wobei zumindest einer der Permanentmagneten (14) in einem Auflagebereich (32) an der Welle (12) eine Metallbeschichtung (38) aufweist und/oder die Welle (12) in dem Auflagebereich (32) eine Beschichtung (38) aus einem Metall aufweist, welches von dem Metall, aus welchem ein Inneres (12) der Welle gefertigt ist, verschieden ist, wobei die Beschichtung (38) bevorzugt Nickel und/oder Kupfer umfasst.

4. Rotor (10) nach einem der vorhergehenden Ansprüche, wobei zumindest einer der Permanentmagneten (14) einen Auflagebereich (32) an der Welle (12) aufweist, in welchem
a) der Permanentmagnet eine konkav gewölbte Oberfläche oder
b) die Welle (12) eine ebene Oberfläche (34) aufweist.

5. Rotor (10) nach einem der vorhergehenden Ansprüche, wobei zumindest eines der Flussleitelemente (16) aus einem Blechpaket gebildet ist.

6. Rotor (10) nach einem der vorhergehenden Ansprüche, wobei zumindest eines der Flussleitelemente 16 an zumindest einen Permanentmagneten (14) angeklebt ist, wobei die Klebeverbindung (22) insbesondere einen Silikonkleber umfasst.

7. Rotor (10) nach einem der vorhergehenden Ansprüche, wobei der Rotor (10) senkrecht zu seiner Rotationsachse (18) einen Querschnitt aufweist, bei welchem die Permanentmagneten (14) sternförmig an der Welle (12) und die Flussleitelemente (16) keilförmig zwischen den Permanentmagneten (14) angeordnet sind.

8. Rotor (10) nach einem der vorhergehenden Ansprüche, wobei bei zumindest einem der Permanentmagneten (14) eine Magnetisierung (24) in Umfangsrichtung (26) weist.

9. Rotor (10) nach einem der vorhergehenden Ansprüche, wobei Magnetisierungen (24) zweier benachbarter Permanentmagneten (14) entgegengesetzt zueinander ausgerichtet sind.

10. Rotor (10) nach einem der vorhergehenden Ansprüche, wobei zumindest eines der Flussleitelemente (16) eine das Flussleitelement (16) in radialer Richtung (28) begrenzende Oberfläche (44) aufweist, die in Umfangsrichtung (26) eine Krümmung mit einem Radius (46) aufweist, der kleiner als ein Hüllkreisradius (42) eines Hüllkreises (40) ist, welcher eine maximalen Außenumfang des Rotors (10) in Umfangsrichtung (26) beschreibt, wobei ein Wert des Radius (46) insbesondere in einem Bereich zwischen 50 und 100 Prozent eines Werts des Hüllkreisradius (42) liegt.

11. Permanenterregte elektrische Maschine, welche einen Rotor (10) gemäß einem der Ansprüche 1 bis 10 aufweist.

12. Elektrische Maschine nach Anspruch 11, die als Synchronmaschine oder als Servomotor oder als Schrittmotor ausgebildet ist.

13. Verfahren zum Herstellen eines Rotors (10) mit Permanenterregung mit den Schritten:
- Befestigen, insbesondere Anlöten, von Permanentmagneten (14) an einer Welle (12) des Rotors (10),
- Anordnen von Flussleitelementen (16) in Zwischenräumen zwischen den Permanentmagneten (14);
- Befestigen der Flussleitelemente (16) an den Permanentmagneten (14),
**dadurch gekennzeichnet, dass**
die Permanentmagneten (14) an der Welle (12) angelötet oder angeschweißt oder mit dieser formschlüssig verbunden werden und die Flussleitelemente (16) beim Befestigen nur genau so weit zwischen die Permanentmagneten (14) geführt werden, dass alle Außenoberflächen (44) von einem Hüllkreis (40) tangential berührt werden und hierzu die Flussleitelemente (16) so weit zwischen die Permanentmagneten (14) geschoben werden, bis jeweilige Stufen (48) der Flussleitelemente (16) auf jeweiligen Auflagekanten (50) der Permanentmagneten (14) aufliegen, wobei jede Auflagekante (50) eines Permanentmagneten (14) eine zu einer Außenseite des Rotors (10) hin weisende Kante des jeweiligen Permanentmagneten (14) ist.

## Claims

1. Rotor (10) having permanent excitation, which for the purposes of permanent excitation has a plurality of permanent magnets (14) arranged around a shaft (12) of the rotor (10) in the circumferential direction (26), wherein a flux-conducting device is provided for conducting a magnetic flux of the permanent magnets (14), wherein the permanent magnets (14) are attached to the shaft (12) itself and the flux-conducting device comprises a plurality of separate soft-magnetic flux-conducting elements (16), each of which is mounted between two of the permanent magnets (14) and fixed thereto, and by this means is indirectly held in place on the shaft (12),
**characterised in that**
at least one of the permanent magnets (14) is soldered or welded onto the shaft (12) or is connected to the shaft in a positive-fitting manner and at least one of the flux-conducting elements (16) has at least one contact area in which the flux-conducting element (16) covers an outer edge of one of the permanent magnets (14) in the radial direction (28).

2. Rotor (10) according to claim 1, wherein the soldered joint includes a solder 36 containing silver and/or tin.

3. Rotor (10) according to claim 1 or 2, wherein at least one of the permanent magnets (14) has a metal coating (38) in a contact area (32) on the shaft (12) and/or the shaft (12) has a coating (38) made of a metal in the contact area (32), which metal is different from the metal from which an interior (12) of the shaft is made, wherein the coating (38) preferably includes nickel and/or copper.

4. Rotor (10) according to one of the preceding claims, wherein at least one of the permanent magnets (14) has a contact area (32) on the shaft (12) in which
a) the permanent magnet has a concavely curved surface or
b) the shaft (12) has a flat surface (34).

5. Rotor (10) according to one of the preceding claims, wherein at least one of the flux-conducting elements (16) is formed from a laminated core.

6. Rotor (10) according to one of the preceding claims, wherein at least one of the flux-conducting elements 16 is adhesively bonded to at least one permanent magnet (14), wherein the adhesive bond (22) in particular includes a silicone glue.

7. Rotor (10) according to one of the preceding claims, wherein the rotor (10) has a cross-section perpendicular to its axis of rotation (18) in which the permanent magnets (14) are arranged in a star shape on the shaft (12) and the flux-conducting elements (16) are arranged in a wedge shape between the permanent magnets (14).

8. Rotor (10) according to one of the preceding claims, wherein a magnetisation (24) points in the circumferential direction (26) in the case of at least one of the permanent magnets (14).

9. Rotor (10) according to one of the preceding claims, wherein magnetisations (24) of two adjacent permanent magnets (14) are aligned in opposite directions to each other.

10. Rotor (10) according to one of the preceding claims, wherein at least one of the flux-conducting elements (16) has a surface (44) which limits the flux-conducting element (16) in the radial direction (28) and has a curvature in the circumferential direction (26) with a radius (46) that is smaller than an enveloping circle radius (42) of an enveloping circle (40) which describes a maximum outer circumference of the rotor (10) in the circumferential direction (26), wherein a value of the radius (46) lies in particular in a range between 50 and 100 percent of a value of the enveloping circle radius (42).

11. Permanently excited electric machine which has a rotor (10) according to one of claims 1 to 10.

12. Electric machine according to claim 11, which is embodied as a synchronous machine or as a servomotor or as a stepper motor.

13. Method for manufacturing a rotor (10) having permanent excitation comprising the steps of:
- attaching, in particular soldering, permanent magnets (14) to a shaft (12) of the rotor (10),
- arranging flux-conducting elements (16) in spaces between the permanent magnets (14);
- attaching the flux-conducting elements (16) to the permanent magnets (14),
**characterised in that**
the permanent magnets (14) are soldered or welded to the shaft (12) or connected to the latter in a positive-fitting manner and during the attachment operation the flux-conducting elements (16) are guided only precisely so far between the permanent magnets (14) that all the external surfaces (44) are tangentially touched by an enveloping circle (40) and toward that end the flux-conducting elements (16) are inserted so far between the permanent magnets (14) until respective steps (48) of the flux-conducting elements (16) bear on respective contact edges (50) of the permanent magnets (14), wherein each contact edge (50) of a permanent magnet (14) is an edge of the respective permanent magnet (14) pointing to an outside face of the rotor (10).

## Revendications

1. Rotor ( 10 ) à excitation permanente qui a, pour l'excitation permanente, une pluralité d'aimants ( 14 ) permanents qui sont disposés dans la direction ( 26 ) périphérique autour d'un arbre ( 12 ) du rotor ( 10 ), dans lequel, pour la conduite d'un flux magnétique des aimants ( 14 ) permanents, il est prévu un dispositif de conduite de flux, les aimants ( 14 ) permanents étant fixés à l'arbre ( 12 ) lui-même et le dispositif de conduite de flux comprenant une pluralité d'éléments ( 16 ) distincts de conduite de flux à magnétisme doux, qui sont fixés respectivement aux aimants ( 14 ) permanents entre deux de ceux-ci et sont ainsi retenus indirectement sur l'arbre ( 12 ),
**caractérisé en ce que**
au moins l'un des aimants ( 14 ) permanent est brasé ou soudé à l'arbre ( 12 ) ou est relié à complémentarité de forme avec l'arbre et au moins l'un des éléments ( 16 ) de conduite de flux a au moins une zone d'appui, dans laquelle l'élément ( 16 ) de conduite de flux recouvre un bord se trouvant à l'extérieur dans la direction ( 28 ) radiale de l'un des aimants ( 14 ) permanents.

2. Rotor ( 10 ) suivant la revendication 1, dans lequel la liaison brasée comprend une brasure ( 36 ) qui contient de l'argent et/ou de l'étain.

3. Rotor ( 10 ) suivant la revendication 1 ou 2, dans lequel au moins l'un des aimants ( 14 ) permanents a, dans une zone ( 32 ) d'appui sur l'arbre ( 12 ), un revêtement ( 38 ) en métal et/ou l'arbre ( 12 ) a, dans la zone ( 32 ) d'appui, un revêtement ( 38 ) en un métal qui est différent du métal dont est fabriqué un intérieur ( 12 ) de l'arbre, le revêtement ( 38 ) comprenant de préférence du nickel et/ou du cuivre.

4. Rotor ( 10 ) suivant l'une des revendications précédentes, dans lequel au moins l'un des aimants ( 14 ) permanents à une zone ( 32 ) d'appui sur l'arbre ( 12 ), dans laquelle
a) l'aimant permanent a une surface courbée de manière concave ou
b) l'arbre ( 12 ) a une surface ( 34 ) plane.

5. Rotor ( 10 ) suivant l'une des revendications précédentes, dans lequel au moins l'un des éléments ( 16 ) de conduite de flux est formé d'un paquet de tôle.

6. Rotor ( 10 ) suivant l'une des revendications précédentes, dans lequel au moins l'un des éléments ( 16 ) de conduite de flux est collé à au moins un aimant ( 14 ) permanent, le collage ( 22 ) comprenant notamment une colle au silicone.

7. Rotor ( 10 ) suivant l'une des revendications précédentes, dans lequel le rotor a, perpendiculairement à son axe ( 18 ) de rotation, une section transversale dans laquelle les aimants ( 14 ) permanents sont disposés en étoile sur l'arbre ( 12 ) et les éléments ( 16 ) de conduite de flux sont disposés en forme de coin entre les aimants ( 14 ) permanents.

8. Rotor ( 10 ) suivant l'une des revendications précédentes, dans lequel? pour au moins l'un des aimants ( 14 ) permanents, une aimantation ( 24 ) est dirigée dans la direction ( 26 ) périphérique.

9. Rotor ( 10 ) suivant l'une des revendications précédentes, dans lequel des aimantations de deux aimants ( 14 ) permanents voisins sont dirigées de manière opposée l'une à l'autre.

10. Rotor ( 10 ) suivant l'une des revendications précédentes, dans lequel au moins l'un des éléments ( 16 ) de conduite de flux a une surface ( 44 ) délimitant l'élément ( 16 ) de conduite de flux dans la direction ( 28 ) radiale et ayant, dans la direction ( 26 ) périphérique, une courbure d'un rayon ( 46 ) qui est plus petit qu'un rayon ( 42 ) d'un cercle ( 40 ) enveloppe, lequel décrit un pourtour extérieur maximum du rotor ( 10 ) dans la direction ( 26 ) périphérique, une valeur du rayon ( 46 ) représentant notamment de 50 à 100 pour-cent d'une valeur du rayon ( 42 ) du cercle enveloppe.

11. Machine électrique à excitation permanente, qui a un rotor ( 10 ) suivant l'une des revendications 1 à 10.

12. Machine électrique suivant la revendication 11, qui est constituée sous la forme d'une machine synchrone ou d'un servomoteur ou d'un moteur pas à pas.

13. Procédé de fabrication d'un rotor ( 10 ) à excitation permanente, comprenant les stades dans lesquels :
- on fixe, notamment en brasant, des aimants ( 14 ) permanents à un arbre ( 12 ) du rotor ( 10 ),
- on met des éléments ( 16 ) de conduite de flux dans les espaces intermédiaires entre les aimants ( 14 ) permanents,
- on fixe les éléments ( 16 ) de conduite de flux aux aimants ( 14 ) permanents,
**caractérisé en ce que**
on brase ou on soude les aimants ( 14 ) permanents à l'arbre ( 12 ) ou on les relie à celui-ci par complémentarité de forme et on ne passe les éléments ( 16 ) de conduite de flux, lors de la fixation, qu'exactement si loin entre les aimants ( 14 ) permanents que toutes les surfaces ( 44 ) extérieures soient touchées tangentiellement par un cercle ( 40 ) enveloppe et, à cet effet, on déplace les éléments ( 16 ) de conduite de flux entre les éléments ( 14 ) permanents jusqu'à ce que des paliers ( 48 ) respectifs des éléments ( 16 ) de conduite de flux s'appliquent à des bords ( 50 ) d'appui respectifs des aimants ( 14 ) permanents, chaque bord ( 50 ) d'appui d'un aimant ( 14 ) permanent étant un bord, tourné vers un côté extérieur du rotor ( 10 ), de l'aimant ( 14 ) permanent respectif.
